# FASCICULE DE BREVET EUROPEEN

(11) **EP 4 324 704 B1**
(45) Date de publication et mention de la délivrance du brevet: **15.01.2025**
(21) Numéro de dépôt: 23190033.3
(22) Date de dépôt: 07.08.2023
(51) Int. Cl.: B60R 13/01

(54) **HABILLAGE DE PROTECTION DE PASSAGE DE ROUE POSITIONNABLE À L'INTÉRIEUR D'UN VÉHICULE ROULANT**
IM INNERN EINES ROLLENDEN FAHRZEUGS POSITIONIERBARE RADLAUFSCHUTZVERKLEIDUNG
WHEEL ARCH COVER POSITIONABLE INSIDE A ROLLING VEHICLE

(30) Priorité: 17.08.2022 FR 2208331
(43) Date de publication de la demande: 21.02.2024
(73) Titulaire: Dabireau Business, 44330 Le Pallet (FR)
(72) Inventeur: DABIREAU, Jean-Michel, 44330 LE PALLET (FR)
(74) Mandataire: Ipsilon

(56) Documents cités:
- FR-A1- 2 964 919
- GB-A- 2 546 420
- US-A1- 2016 200 372

## Description

La présente invention concerne un habillage de protection de passage de roue positionnable à l'intérieur d'un véhicule roulant du genre fourgon à recouvrement par l'extérieur d'un passage de roue dudit véhicule roulant pour la protection dudit passage de roue ainsi qu'un véhicule roulant équipé d'un tel habillage.

La protection de passage de roue de véhicule roulant en vue de permettre la délimitation d'espace de rangement à l'intérieur du véhicule roulant sans générer d'endommagement du passage de roue est connue. Cette protection s'opère à l'aide de panneaux de bois qui sont assemblés entre eux pour former autour du passage de roue un habillage de type caisson. Ces opérations d'assemblage des panneaux entre eux et de fixation des panneaux au véhicule sont fastidieuses. Elles ont pour avantage d'aboutir à la réalisation d'une structure offrant une résistance mécanique suffisante. Ainsi, le document FR 2694917 A1 divulgue un habillage de protection de passage de roue positionnable à l'intérieur d'un véhicule roulant du genre fourgon à recouvrement d'un passage de roue dudit véhicule roulant pour la protection dudit passage de roue. Le document FR 2964919 A1 divulgue un habillage de protection de passage de roue positionnable à l'intérieur d'un véhicule roulant.

Un but de l'invention est de proposer un habillage de protection de passage de roue du type précité dont la conception permet un stockage à plat avant montage, un montage aisé et l'obtention d'une résistance mécanique finale suffisante.

A cet effet, l'invention a pour objet un habillage de protection de passage de roue positionnable à l'intérieur d'un véhicule roulant du genre fourgon à recouvrement d'un passage de roue dudit véhicule roulant pour la protection dudit passage de roue, caractérisé en ce que ledit habillage comprend un flan composite multicouches conformable par pliage et formant à l'état conformé un caisson polyédrique comprenant une face de dessus, une face de dessous, deux faces latérales, une face avant et une face arrière, les faces arrière et de dessous du caisson étant des faces ouvertes, au moins chaque face autre qu'une face ouverte étant reliée à au moins une autre face par une ligne de pliage formée par un amincissement du flan, et au moins les faces latérales et la face de dessus étant munies chacune au niveau de leur bord de délimitation de la face arrière d'une aile périphérique externe formant avec la face associée un angle compris entre 70 °et 120°, l'angle formé entre chaque face latérale et la face de dessus étant muni intérieurement d'un rabat réalisé d'une seule pièce avec la face latérale ou la face de dessus à laquelle il est relié par une ligne de pliage.

L'utilisation d'un flan composite multicouches pliable et prédécoupé permet un stockage aisé de l'habillage avant son installation et, par simple conformation par pliage manuel, l'obtention d'un caisson réalisé d'une seule pièce, de résistance mécanique suffisante. La présence d'ailes permet une fixation aisée au véhicule. En particulier, le fait qu'au moins les faces latérales et la face du dessus du caisson soient munies chacune au niveau de leur bord de délimitation de la face arrière d'une aile périphérique externe formant avec la face associée un angle compris entre 70° et 120° permet un positionnement en applique de l'habillage à recouvrement du passage de roue à protéger.

L'utilisation d'un flan composite permet en outre l'obtention d'un état de surface final du caisson ne nécessitant aucun traitement supplémentaire.

Selon un mode de réalisation de l'invention, le flan composite multicouches comprend au moins une couche de matière de synthèse prise en sandwich entre deux couches de métal. La présence de couches de métal en surface permet en outre l'obtention d'un état de surface amélioré.

Selon un mode de réalisation de l'invention, chaque face latérale et la face de dessus du caisson sont munies, au niveau de leur bord de délimitation de la face arrière, d'au moins une patte réalisée d'une seule pièce avec ledit bord, la patte de chaque face latérale étant superposée avec une patte de la face de dessus. La présence de pattes permet un maintien aisé à l'état monté du caisson.

Selon un mode de réalisation de l'invention, chaque patte est munie d'un perçage, les perçages des pattes d'une superposition de pattes étant disposés en coïncidence pour former un passage de réception d'un organe, tel qu'une vis, de liaison desdites pattes entre elles.

Selon un mode de réalisation de l'invention, la face avant du caisson est également munie, au niveau de son bord de délimitation de la face du dessous, d'une aile périphérique externe formant avec la face associée un angle compris entre 70 °et 120°. A nouveau, cette aile permet un maintien aisé en applique du caisson le long du véhicule.

L'invention a encore pour objet un véhicule roulant dit utilitaire du genre fourgon équipé de passages de roue et d'au moins un habillage de protection de passage de roue positionnable à l'intérieur dudit véhicule roulant à recouvrement par l'extérieur d'un passage de roue dudit véhicule roulant pour la protection dudit passage de roue, caractérisé en ce que ledit habillage est du type précité.

### Brève description des dessins

L'invention sera bien comprise à la lecture de la description suivante d'exemples de réalisation, en référence aux dessins annexés dans lesquels :
[Fig. 1] représente une vue en perspective d'un véhicule roulant conforme à l'invention à l'état non fixé du caisson au véhicule ;
[Fig. 2] représente une vue en perspective d'un véhicule roulant conforme à l'invention à l'état fixé du caisson au véhicule ;
[Fig. 3] représente une vue à plat du flan avant le début de sa conformation sous forme de caisson ;
[Fig. 4] représente une vue en perspective du flan au cours de sa conformation sous forme de caisson ;
[Fig. 5] représente une vue en perspective du flan au cours de sa conformation sous forme de caisson ;
[Fig. 6] représente une vue en perspective du caisson à l'issue de sa conformation ;
[Fig. 7] représente une vue schématique d'une ligne de pliage du flan ;

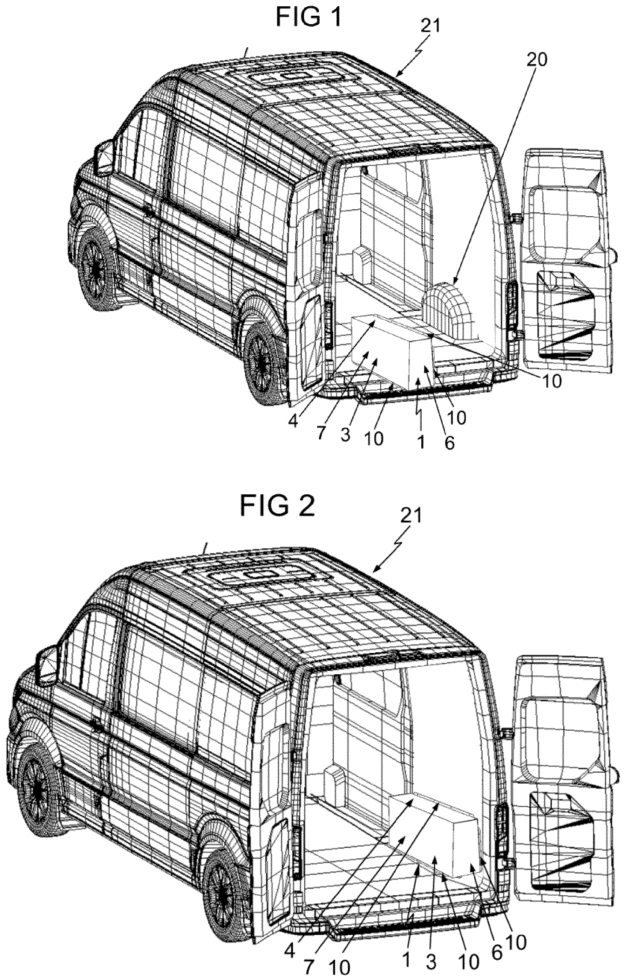

Comme mentionné ci-dessus, l'invention a pour objet un habillage 1 de protection de passage de roue positionnable à l'intérieur d'un véhicule 21 roulant du genre fourgon, tel qu'illustré à la figure 1. Cet habillage 1 permet, d'une part, de protéger le passage de roue, d'autre part, de ménager, à l'état fixé à la paroi longitudinale du véhicule roulant, une surface d'appui qui peut servir de surface de rangement, d'assise ou autre. Cet habillage 1 de protection vient, une fois positionné à l'intérieur du véhicule roulant, se positionner à recouvrement par l'extérieur sur le passage 20 de roue de sorte qu'il reste visible depuis l'intérieur du véhicule et constitue alors la surface apparente du passage 20 de roue.

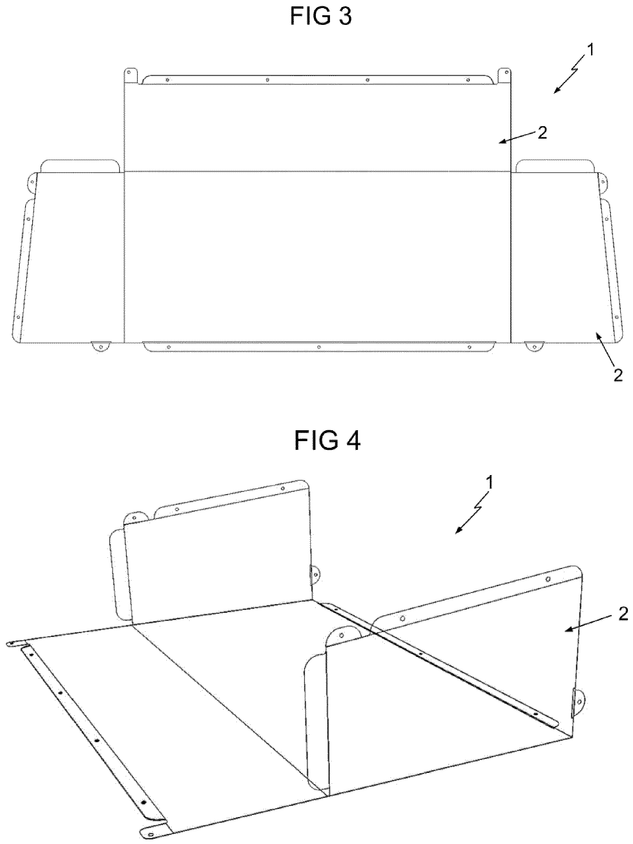

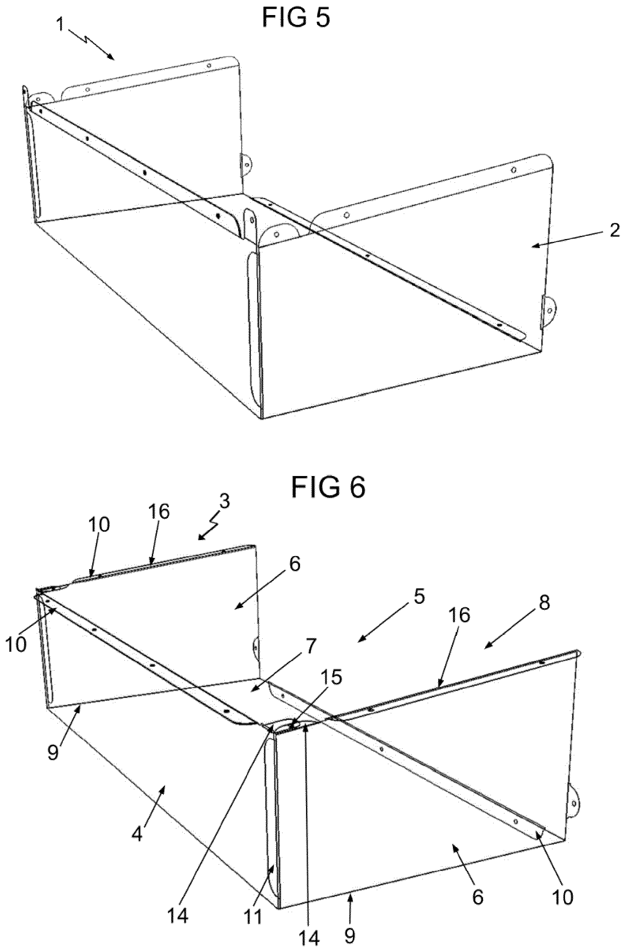

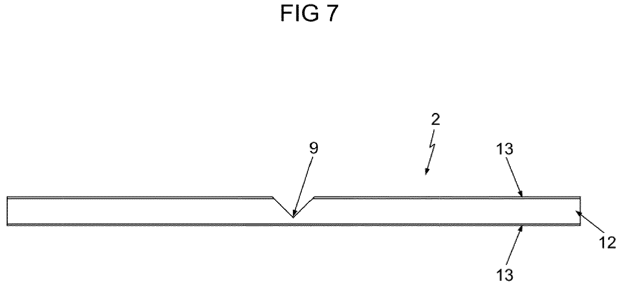

Généralement, un tel véhicule est équipé de deux habillages 1 de protection, à savoir un par passage 20 de roue. Cet habillage 1 de protection se présente initialement sous forme d'un flan 2 composite multicouches, tel qu'illustré à la figure 3. Ce flan 2 composite multicouches comprend une couche 12 de matière de synthèse prise en sandwich entre deux couches 13 de métal. Ce flan 2 comprend localement des amincissements de matière formant une ligne de pliage du flan 2. Un exemple est illustré à la figure 7. Ainsi, un tel flan 2 peut être plié et mis en forme manuellement sans outil. La conformation par le pliage du flan 2 permet l'obtention d'un caisson 3 polyédrique conforme à celui représenté à la figure 6.

Ce caisson 3 polyédrique de forme générale parallélépipédique comprend un face 4 de dessus, une face 5 de dessous, deux faces 6 latérales, une face 7 avant et une face 8 arrière. Les faces 8 arrière et 5 de dessous du caisson 3 sont des faces ouvertes. Chaque face 4, 6, 7, autre que les faces ouvertes est reliée à au moins une autre face par une ligne 9 de pliage formée par un amincissement du flan 2, tel qu'illustré à la figure 7. Les faces 6 latérales et la face 4 de dessus sont munies chacune, au niveau de leur bord 16 de délimitation de la face 8 arrière, d'une aile 10 périphérique externe formant, avec la face 6 latérale ou 4 de dessus associée, un angle α compris entre 70°et 120° pour permettre un positionnement en applique de l'habillage 1 à recouvrement du passage 20 de roue à protéger, comme illustré à la figure 2. L'angle formé entre chaque face 6 latérale et la face 4 de dessus est muni intérieurement d'un rabat 11 réalisé d'une seule pièce avec la face 6 latérale ou la face 4 de dessus à laquelle il est relié par une ligne 9 de pliage.

Pour parfaire l'ensemble, chaque face 6 latérale et la face 4 de dessus du caisson 3 sont munies, au niveau de leur bord 16 de délimitation de la face 8 arrière, d'au moins une patte 14 réalisée d'une seule pièce avec ledit bord 16. La patte 14 de chaque face 6 latérale est superposée avec une patte 14 de la face 4 de dessus. Ainsi, chaque patte 14 est munie d'un perçage 15. Les perçages 15 des pattes 14 d'une superposition de pattes 14 sont disposés en coïncidence pour former un passage de réception d'un organe desdites pattes 14 entre elles. Cet organe de liaison se présente ici sous forme d'une vis auto-taraudeuse mais aurait pu être remplacé par un rivet.

Enfin, la face avant du caisson est également munie, au niveau de son bord de délimitation de la face du dessous, d'une aile périphérique externe formant avec la face associée un angle compris entre 70 °et 120°.

La conformation par pliage du flan tel que représenté à la figure 3, pour l'obtention d'un caisson, tel qu'illustré à la figure 6, peut s'opérer comme représenté aux figures 4 et 5. Ainsi, dans un premier temps, les parties du flan 2 destinées à former les faces 6 latérales du caisson 3 sont positionnées à angle droit et d'un même côté de la partie du flan 2 destinée à former la face 7 avant fermée du caisson3. Les rabats 11 sont ensuite repliés en direction de l'intérieur du U formé par les faces latérales et la face avant. Ces rabats 11 équipent ici chacun une face latérale du caisson 3 mais auraient pu, de manière équivalente, équiper la face 4 de dessus dudit caisson sans sortir du cadre de l'invention.

La partie du flan destinée à former la face 4 de dessus du caisson 3 est ensuite repliée à angle droit de la face avant pour venir s'appliquer sur lesdits rabats 11. Les ailes 10 sont alors repliées à angle droit de la face à laquelle elles sont associées en direction de l'extérieur du caisson pour former une aile d'applique contre une paroi longitudinale du caisson ou contre le plancher du véhicule pour l'aile associée à la face avant du caisson. Ces ailes sont pré-percées pour permettre un positionnement en applique à l'intérieur du véhicule roulant par simple vissage.

Enfin, la patte 14 de chaque face latérale est superposée avec une patte 14 de la face du dessus pour former une superposition de pattes dont les perçages sont en coïncidence à l'état superposé et permettent le passage d'une vis de liaison des pattes entre elles. La conformation du caisson est alors achevée et la fixation de ce dernier au véhicule peut s'opérer par simple vissage des ailes au véhicule roulant comme illustré à la figure 2. Cette fixation par vissage s'opère après positionnement du caisson depuis l'intérieur du véhicule roulant contre le passage de roue.

## Revendications

1. Habillage (1) de protection de passage de roue positionnable à l'intérieur d'un véhicule (21) roulant du genre fourgon à recouvrement d'un passage (20) de roue dudit véhicule (21) roulant pour la protection dudit passage (20) de roue, **caractérisé en ce que** ledit habillage (1) comprend un flan (2) composite multicouches conformable par pliage et formant à l'état conformé un caisson (3) polyédrique comprenant une face (4) de dessus, une face (5) de dessous, deux faces (6) latérales, une face (7) avant et une face (8) arrière, les faces (8) arrière et (5) de dessous du caisson (3) étant des faces ouvertes, au moins chaque face (4, 6, 7) autre que les faces ouvertes, étant reliée à au moins une autre face par une ligne (9) de pliage formée par un amincissement du flan (2), et au moins les faces (6) latérales et la face (4) de dessus étant munies chacune au niveau de leur bord (16) de délimitation de la face (8) arrière d'une aile (10) périphérique externe formant avec la face (6, 4) associée un angle (α) compris entre 70 °et 120°, l'angle formé entre chaque face (6) latérale et la face (4) de dessus étant muni intérieurement d'un rabat (11) réalisé d'une seule pièce avec la face (6) latérale ou la face (4) de dessus à laquelle il est relié par une ligne (9) de pliage.

2. Habillage (1) de protection de passage de roue selon la revendication 1, **caractérisé en ce que** le flan (2) composite multicouches comprend au moins une couche (12) de matière de synthèse prise en sandwich entre deux couches (13) de métal.

3. Habillage (1) de protection de passage de roue selon l'une des revendications 1 ou 2, **caractérisé en ce que** chaque face (6) latérale et la face (4) de dessus du caisson (3) sont munies, au niveau de leur bord (16) de délimitation de la face (8) arrière, d'au moins une patte (14) réalisée d'une seule pièce avec ledit bord (16), la patte (14) de chaque face (6) latérale étant superposée avec une patte (14) de la face (4) de dessus.

4. Habillage (1) de protection de passage de roue selon la revendication 3, **caractérisé en ce que** chaque patte (14) est munie d'un perçage (15), les perçages (15) des pattes (14) d'une superposition de pattes (14) étant disposés en coïncidence pour former un passage de réception d'un organe, tel qu'une vis, de liaison desdites pattes (14) entre elles.

5. Habillage (1) de protection de passage de roue selon l'une des revendications 1 à 4, **caractérisé en ce que** la face avant (7) du caisson (3) est également munie, au niveau de son bord de délimitation de la face du dessous (5), d'une aile (10) périphérique externe formant avec la face associée un angle compris entre 70 °et 120°.

6. Véhicule (21) roulant dit utilitaire du genre fourgon équipé de passages (20) de roue et d'au moins un habillage (1) de protection de passage de roue positionnable à l'intérieur dudit véhicule (21) roulant à recouvrement d'un passage de roue dudit véhicule (21) roulant pour la protection dudit passage (20) de roue, **caractérisé en ce que** ledit habillage (1) est conforme à l'une des revendications 1 à 5.

## Patentansprüche

1. Radlaufschutzverkleidung (1), die im Inneren eines rollenden Fahrzeugs (21) von der Art eines Kastenwagens positionierbar ist, zur Abdeckung eines Radlaufs (20) des rollenden Fahrzeugs (21) für den Schutz des Radlaufs (20), **dadurch gekennzeichnet, dass** die Verkleidung (1) einen mehrschichtigen Verbundzuschnitt (2) umfasst, der durch Faltung umformbar ist und im umgeformten Zustand einen vielflächigen Kasten (3) bildet, der eine Oberseite (4), eine Unterseite (5), zwei laterale Seiten (6), eine Vorderseite (7) und eine Hinterseite (8) umfasst, wobei die Hinter- (8) und Unterseite (5) des Kastens (3) offene Seiten sind, mindestens jede von den offenen Seiten verschiedene Seite (4, 6, 7) mit mindestens einer anderen Seite durch eine Faltlinie (9) verbunden ist, die durch eine Verdünnung des Zuschnitts (2) gebildet ist, und mindestens die lateralen Seiten (6) und die Oberseite (4) jeweils an ihrem an die Hinterseite (8) grenzenden Rand (16) mit einem äußeren Umfangsflansch (10) ausgestattet sind, der mit der zugeordneten Seite (6, 4) einen Winkel (α) zwischen 70° und 120° bildet, wobei der zwischen jeder lateralen Seite (6) und der Oberseite (4) gebildete Winkel innen mit einer Klappe (11) ausgestattet ist, die aus einem Stück mit der lateralen Seite (6) oder der Oberseite (4) hergestellt ist, mit der sie durch eine Faltlinie (9) verbunden ist.

2. Radlaufschutzverkleidung (1) nach Anspruch 1, **dadurch gekennzeichnet, dass** der mehrschichtige Verbundzuschnitt (2) mindestens eine Kunststoffschicht (12) umfasst, die sandwichartig zwischen zwei Metallschichten (13) angeordnet ist.

3. Radlaufschutzverkleidung (1) nach einem der Ansprüche 1 oder 2, **dadurch gekennzeichnet, dass** jede laterale Seite (6) und die Oberseite (4) des Kastens (3) an ihrem an die Hinterseite (8) grenzenden Rand (16) mit mindestens einer Lasche (14) ausgestattet ist, die mit dem Rand (16) aus einem Stück hergestellt ist, wobei die Lasche (14) jeder lateralen Seite (6) mit einer Lasche (14) der Oberseite (4) überlagert ist.

4. Radlaufschutzverkleidung (1) nach Anspruch 3, **dadurch gekennzeichnet, dass** jede Lasche (14) mit einer Bohrung (15) ausgestattet ist, wobei die Bohrungen (15) der Laschen (14) einer Überlagerung von Laschen (14) zusammenfallend angeordnet sind, um einen Durchgang zur Aufnahme eines Elements, wie etwa einer Schraube, zur Verbindung der Laschen (14) miteinander zu bilden.

5. Radlaufschutzverkleidung (1) nach einem der Ansprüche 1 bis 4, **dadurch gekennzeichnet, dass** die Vorderseite (7) des Kastens (3) ebenfalls, an ihrem an die Unterseite (5) grenzenden Rand, mit einem äußeren Umfangsflansch (10) ausgestattet ist, der mit der zugeordneten Seite einen Winkel zwischen 70° und 120° bildet.

6. Rollendes, als Nutzfahrzeug bezeichnetes Fahrzeug (21) von der Art eines Kastenwagens, das mit Radläufen (20) und mit mindestens einer im Inneren des rollenden Fahrzeugs (21) positionierbaren Radlaufschutzverkleidung (1) zur Abdeckung eines Radlaufs des rollenden Fahrzeugs (21) für den Schutz des Radlaufs (20) ausgerüstet ist, **dadurch gekennzeichnet, dass** die Verkleidung (1) einem der Ansprüche 1 bis 5 entspricht.

## Claims

1. Wheel arch protective covering (1) positionable inside a rolling vehicle (21) of the van type covering a wheel arch (20) of said rolling vehicle (21) to protect said wheel arch (20), **characterized in that** said covering (1) comprises a multilayer composite blank (2) conformable by folding and forming, in the shaped state, a polyhedral box (3) comprising a top face (4), a bottom face (5), two lateral faces (6), a front face (7) and a rear face (8), the rear faces (8) and bottom faces (5) of the box (3) being open faces, at least each face (4, 6, 7) other than the open faces being connected to at least one other face by a fold line (9) formed by a thinning of the blank (2), and at least the lateral faces (6) and the top face (4) being each provided, at their edge (16) delimiting the rear face (8), with an outer peripheral flange (10) forming an angle (a) of between 70° and 120° with the associated face (6, 4), the angle formed between each lateral face (6) and the top face (4) being provided internally with a flap (11) made in one piece with the lateral face (6) or the top face (4) to which it is connected by a fold line (9).

2. Wheel arch protective covering (1) according to Claim 1, **characterized in that** the multilayer composite blank (2) comprises at least one layer (12) of synthetic material sandwiched between two layers (13) of metal.

3. Wheel arch protective covering (1) according to one of Claims 1 or 2, **characterized in that** each lateral face (6) and the top face (4) of the box (3) are provided, at their edge (16) delimiting the rear face (8), with at least one tab (14) made in one piece with said edge (16), the tab (14) of each lateral face (6) being superposed with a tab (14) of the top face (4).

4. Wheel arch protective covering (1) according to Claim 3, **characterized in that** each tab (14) is provided with a hole (15), the holes (15) of the tabs (14) of a superposition of tabs (14) being arranged in register to form a passage for receiving a member, such as a screw, for connecting said tabs (14) to one another.

5. Wheel arch protective covering (1) according to one of Claims 1 to 4, **characterized in that** the front face (7) of the box (3) is also provided, at its edge delimiting the bottom face (5), with an outer peripheral flange (10) forming an angle of between 70° and 120° with the associated face.

6. Rolling vehicle (21) referred to as utility vehicle of the van type equipped with wheel arches (20) and with at least one wheel arch protective covering (1) positionable inside said rolling vehicle (21) so that it covers a wheel arch of said rolling vehicle (21) to protect said wheel arch (20), **characterized in that** said covering (1) is in accordance with one of Claims 1 to 5.
